# EUROPÄISCHE PATENTANMELDUNG

(11) **EP 4 775 864 A1**
(43) Veröffentlichungstag der Anmeldung: **15.07.2026**
(21) Anmeldenummer: 26150323.9
(22) Anmeldetag: 06.01.2026
(51) Int. Cl.: F16L 5/04, F16L 5/14, F16L 55/10, A62C 2/06

(54) **BRANDSCHUTZKLAPPENEINBAUSATZ**

(30) Priorität: 14.01.2025 DE 202025100149 U
(71) Anmelder: TROX SE, 47506 Neukirchen-Vluyn (DE)
(72) Erfinder: Fels, Martin, 46459 Rees (DE); Massel, Daniel, 41379 Brüggen (DE)
(74) Vertreter: Dr. Stark & Partner Patentanwälte mbB

(57) **Zusammenfassung**

Die Erfindung betrifft einen Brandschutzklappeneinbausatz für den Einbau von zumindest zwei Brandschutzklappen (1), wobei der Brandschutzklappeneinbausatz für die Anordnung in einer Ausnehmung einer Wand oder einer Decke ausgebildet ist, wobei jede Brandschutzklappe (1) ein Gehäuse aufweist und jeweils einen Bestandteil einer raumlufttechnischen Be- und/oder Entlüftungsanlage bildet, wobei der Brandschutzklappeneinbausatz zumindest eine Platte (2) mit einer Anzahl an Aussparungen zur jeweiligen Aufnahme des Gehäuses einer Brandschutzklappe (1) umfasst, wobei die Anzahl an Aussparungen der Anzahl an aufzunehmenden Brandschutzklappen (1) entspricht, wobei die Platte (2) wenigstens zwei Plattensegmente (2a) umfasst, die so ausgebildet sind, dass die Gesamtheit ihrer Plattensegmente (2a) die Aussparungen bildet und somit ein in die Aussparung eingesetztes Gehäuse von der Gesamtheit an Plattensegmenten (2a) allseitig umgeben ist, wobei jedes Plattensegment (2a) seitlich von außen an zumindest einem Gehäuse anbringbar oder um zumindest ein Gehäuse zumindest teilweise herum anbringbar ist, und wobei sich jedes Plattensegment (2a) im angebrachten Zustand mittelbar oder unmittelbar an zwei Stoßkanten mit dem oder den anderen Plattensegment(en) (2a) berührt.

## Beschreibung

Die Erfindung betrifft einen Brandschutzklappeneinbausatz.

Eine Brandschutzklappe ist eine Komponente zum Einbau in einen Lüftungskanal einer klimatechnischen Be- und/oder Entlüftungsanlage. Eine Brandschutzklappe soll eine Übertragung von Feuer und von Rauch von einem Abschnitt eines Lüftungskanals in den nächsten Abschnitt des Lüftungskanals verhindern. Eine Brandschutzklappe wird unter anderem in eine Ausnehmung in einer Gebäudewand installiert. Hierfür weist die Brandschutzklappe einen die Brandschutzklappe außenseitig umgebenden Brandschutzklappeneinbausatz auf, mittels dem die Brandschutzklappe in der Ausnehmung montiert wird.

Als nachteilig erweist sich, dass teilweise der bauseits zur Verfügung stehende Platz zu gering ist, wenn in unmittelbarer Nähe des betreffenden Lüftungskanals noch ein weiterer Lüftungskanal oder weitere Lüftungskanäle angeordnet ist (sind).

Aufgabe der Erfindung ist es, die vorgenannten Nachteile zu vermeiden und einen Brandschutzklappeneinbausatz anzugeben, der auch die Montage von Lüftungskanälen ermöglicht, sofern mehrere Lüftungskanäle in unmittelbarer Nähe angeordnet sind.

Diese Aufgabe wird gelöst durch einen Brandschutzklappeneinbausatz für den Einbau von zumindest zwei Brandschutzklappen, wobei der Brandschutzklappeneinbausatz für die Anordnung in einer Ausnehmung einer Wand oder einer Decke ausgebildet ist, wobei jede Brandschutzklappe ein Gehäuse aufweist und jeweils einen Bestandteil einer raumlufttechnischen Be- und/oder Entlüftungsanlage bildet, wobei der Brandschutzklappeneinbausatz zumindest eine Platte mit einer Anzahl an Aussparungen zur jeweiligen Aufnahme des Gehäuses einer Brandschutzklappe umfasst, wobei die Anzahl an Aussparungen der Anzahl an aufzunehmenden Brandschutzklappen entspricht, wobei die Platte wenigstens zwei Plattensegmente umfasst, die so ausgebildet sind, dass die Gesamtheit ihrer Plattensegmente die Aussparungen bildet und somit ein in die Aussparung eingesetztes Gehäuse von der Gesamtheit an Plattensegmenten allseitig umgeben ist, wobei jedes Plattensegment seitlich von außen an zumindest einem Gehäuse anbringbar oder um zumindest ein Gehäuse zumindest teilweise herum anbringbar ist, und wobei sich jedes Plattensegment im angebrachten Zustand mittelbar oder unmittelbar an zwei Stoßkanten mit dem oder den anderen Plattensegment(en) berührt.

Der erfindungsgemäße Brandschutzklappeneinbausatz ermöglicht, dass mehrere Brandschutzklappen in ein und demselben Brandschutzklappeneinbausatz verbaut sein können. Damit ist auch eine Montage von Brandschutzklappen, die in in einem geringen Abstand zueinander angeordneten Lüftungskanälen eingesetzt sind, möglich. Sofern sich die entsprechenden Plattensegmente einer Platte im angebrachten Zustand mittelbar an zwei Stoßkanten mit dem oder den anderen Plattensegment(en) dieser Platte berühren, kann zwischen zwei Stoßkanten noch ein weiteres Bauteil, wie beispielsweise ein Dichtungsstreifen, vorgesehen sein. Jedes Plattensegment ist dabei seitlich von außen, d. h. auf das Gehäuse bezogen, an zumindest einem Gehäuse anbringbar oder um zumindest ein Gehäuse zumindest teilweise herum anbringbar.

Bei dem erfindungsgemäßen Brandschutzklappeneinbausatz ist ein in die Aussparung eingesetztes Gehäuse von der Gesamtheit an Plattensegmenten allseitig umgeben. Damit ist ein Gehäuse nicht von einem einzigen Plattensegment, sondern von zumindest zwei Plattensegmenten umgeben.

Dabei kann zumindest ein Plattensegment mehreren Aufnahmen zugehörig sein.

Zumindest ein Plattensegment, vorzugsweise jedes Plattensegment, kann seitlich von außen in radialer Richtung an zumindest einem Gehäuse anbringbar oder um zumindest ein Gehäuse zumindest teilweise anbringbar sein.

Der Brandschutzklappeneinbausatz kann für die Aufnahme von zumindest zwei Brandschutzklappen ausgebildet sein und zumindest eine Platte kann genau zwei Plattensegmente umfassen, wobei jedes Plattensegment dieser Platte derart ausgebildet ist, dass die beiden Plattensegmente im an den Brandschutzklappen angebrachten Zustand je eine Aussparung für jedes aufzunehmende Gehäuse einer Brandschutzklappe bilden. Bei einem Gehäuse mit einem runden Gehäusequerschnitt weist insoweit jedes Plattensegment zwei halbkreisförmige Ausnehmungen auf, so dass im zusammengesetzten Zustand die beiden Plattensegmente zwei runde Aussparungen bilden. Bei einem Gehäuse mit einem eckigen Gehäusequerschnitt kann jedes Plattensegment zwei rechteckförmige Ausnehmungen aufweisen, so dass im zusammengesetzten Zustand die beiden Plattensegmente zwei eckige Aussparungen bilden. Es ist aber bei Gehäusen mit jeweils einem eckigen Gehäusequerschnitt auch möglich, dass nur ein Plattensegment die zwei rechteckförmigen Ausnehmungen in der erforderlichen Größe bildet, und das zweite Plattensegment lediglich an der jeweils freien vierten Seite jedes Gehäuses von außen anliegt.

Der Brandschutzklappeneinbausatz kann für die Aufnahme von zwei Brandschutzklappen ausgebildet sein und zumindest eine Platte kann drei Plattensegmente aufweisen, wobei zwei Plattensegmente jeweils einen Plattenendbereich dieser Platte und das dritte Plattensegment das Plattenmittelteil dieser Platte bilden und wobei jedes einen Plattenendbereich bildende Plattensegment mit dem Plattenmittelteil jeweils eine Aussparung bildet.

Auch kann der Brandschutzklappeneinbausatz für die Aufnahme von drei Brandschutzklappen ausgebildet sein und zumindest eine Platte kann vier Plattensegmente aufweisen, wobei zwei Plattensegmente jeweils einen Plattenendbereich dieser Platte und das dritte und vierte Plattensegment jeweils eines der beiden Plattenmittelteile dieser Platte bilden und wobei jedes ein Plattenendbereich bildende Plattensegment mit dem jeweils direkt angrenzenden Plattenmittelteil jeweils eine Aussparung bildet.

Bei zumindest einer Aussparung können die beiden Stoßkanten der die Aussparung bildenden Plattensegmente nicht auf gleicher Höhe sein.

Zumindest eine Platte kann als Kalziumsilikat-Platte ausgebildet sein. Kalziumsilikat-Platten sind hitzebeständig, feuerfest und stellen eine geeignete Hochtemperatur-Isolierung dar.

Alternativ kann zumindest eine Platte aus einem Vollholz, aus einem Werkstoff auf Vollholzbasis oder aus einem Werkstoff auf Holzfurnierbasis bestehen. Unter einem Werkstoff auf Vollholzbasis wird beispielsweise eine Massivholzplatte, ein Brettschichtholz (BSH) oder ein lamelliertes Holz, verstanden. Beispiele für einen Werkstoff auf Holzfurnierbasis sind beispielsweise Furnierschichtholz (LVL) oder Furnierstreifenholz (PSL). Auch eine Wabenplatte ist denkbar.

Zumindest eine Platte kann aus einem flachen und eben ausgebildeten Blech bestehen.

Zumindest eine aus einem flachen und eben ausgebildeten Blech bestehende Platte kann als Frontblende ausgebildet sein.

An die Stoßkante eines Plattensegments kann zumindest in einem Teilbereich ein gegenüber der Stoßkante vorstehender Überlappungsbereich angrenzen, wobei der Überlappungsbereich in Bezug auf die generelle Erstreckung dieses Plattensegments um die Materialstärke dieses Plattensegments versetzt angeordnet ist. Im angebrachten Zustand berühren sich die Plattensegmente einer Platte an ihren beiden Stoßkanten. In dem Teilbereich, wo ein Überlappungsbereich vorgesehen ist, werden die sich berührenden Stoßkanten dabei durch den Überlappungsbereich überdeckt, so dass insoweit der Überlappungsbereich den Bereich der sich berührenden Stoßkanten zusätzlich schützt.

Die Plattensegmente zumindest einer Platte, die sich im angebrachten Zustand an zwei Stoßkanten mit dem oder den anderen Plattensegment(en) berühren, können im angebrachten Zustand durch zumindest ein separates Fixierelement mittelbar in Bezug auf eine Relativbewegung zueinander in zumindest einer Richtung fixiert sein, wobei jedes Plattensegment zweier angrenzender Plattensegmente, vorzugsweise in dem an die Stoßkante angrenzenden Endbereich, jeweils wenigstens einen von außen seitlich zugänglichen Einführbereich, vorzugsweise einen als Einführöffnung ausgebildeten Einführbereich, aufweist, und dass die beiden aneinandergrenzenden Plattensegmente durch wenigstens eine als Fixierelement ausgebildete Klammer, die mit einem Teilbereich in zumindest einen Einführbereich des einen Plattensegmentes und mit einem anderen Teilbereich in zumindest einen Einführbereich des anderen Plattensegmentes hineingreift, fixiert sind. Beim Anbringen muss lediglich die Klammer von außen mit ihren Teilbereichen in die Einführbereiche der Plattensegmente eingeführt werden. Vorzugsweise besteht zumindest eine Klammer aus einem, vorzugsweise flachen und eben ausgebildeten, Blech.

Zumindest eine Klammer kann eine u-förmige Ausgestaltung unter Bildung eines Stegs und zweier daran angeformter, vorzugsweise parallel ausgerichteter, Fixierschenkel aufweisen.

Die Plattensegmente zweier angrenzender Plattensegmente können in ihren angrenzenden Endbereichen einen gemeinsamen Aufnahmebereich zur Aufnahme eines Teilbereichs der Klammer, vorzugsweise des Steges der Klammer, bilden.

Jeder Einführbereich kann eine Wirkfläche aufweisen, wobei die Wirkflächen der zusammenwirkenden Einführbereiche zweier angrenzender Plattensegmente im fixierten Zustand voneinander wegweisen und in einem Abstand B zueinander angeordnet sind.

Der Brandschutzklappeneinbausatz kann zumindest zwei Platten umfassen, wobei benachbarte Platten flächig aneinander liegen. Bei einer solchen Ausgestaltung bietet es sich an, wenn die Stoßkanten der ein und dieselbe Aussparung bildenden Plattensegmente zumindest zweier flächig aneinander liegender Platten nicht fluchtend angeordnet sind. Die flächig aneinander liegenden Plattensegmente benachbarter Platten können beispielsweise miteinander verschraubt sein.

Die Erfindung betrifft auch eine Kombination umfassend zum einen zumindest zwei Brandschutzklappen, wobei jede Brandschutzklappe ein, vorzugsweise einen runden oder einen viereckigen Strömungsquerschnitt aufweisendes, Gehäuse und ein darin, vorzugsweise mittig auf den Strömungsquerschnitt bezogen, zwischen einer Offenstellung und einer Schließstellung um eine Drehachse herum verschwenkbar gelagertes, vorzugsweise aus Kalziumsilikat bestehendes, Klappenblatt aufweist, sowie umfassend zum anderen einen die Gehäuse aller Brandschutzklappen außenseitig umgebenen Brandschutzklappeneinbausatz, wobei der Brandschutzklappeneinbausatz nach einem der Ansprüche ausgebildet ist und der Brandschutzklappeneinbausatz eine der Anzahl an Brandschutzklappen entsprechende Anzahl an Aussparungen aufweist, wobei jede Aussparung jeweils ein Gehäuse einer Brandschutzklappe aufnimmt. Im Allgemeinen ist das Klappenblatt dabei gegen die Rückstellkraft zumindest eines Federelementes aus seiner Schließstellung in seine Offenstellung um die Drehachse herum schwenkbar gelagert, wobei in seiner Offenstellung das Klappenblatt parallel zur Strömungsrichtung ausgerichtet ist und in seiner Schließstellung das Klappenblatt rechtwinklig zur Strömungsrichtung ausgerichtet ist, wobei die Brandschutzklappe in der Regel zumindest ein Halteelement aufweist, das das Klappenblatt in seiner Offenstellung hält und im Brandfall, vorzugsweise bei einer Temperatur zwischen 70 °C und 95 °C, nachgibt, vorzugsweise schmilzt, so dass das Klappenblatt durch die Rückstellkraft des zumindest einen Federelementes in seine Schließstellung verschwenkt wird.

Dabei kann zwischen zumindest einer angebrachten Platte und der Außenseite eines Gehäuses wenigstens ein, vorzugsweise aus einem intumeszierenden Material bestehender, Dichtungsstreifen angeordnet sein.

Im Folgenden werden in den Zeichnungen dargestellte Ausführungsbeispiele der Erfindung erläutert. Es zeigen:
- Fig. 1: ein erstes Ausführungsbeispiel eines erfindungsgemäßen Brandschutzklappeneinbausatzes mit zwei darin angeordneten Brandschutzklappen in der schrägen Ansicht von vorne,
- Fig. 2: den Gegenstand nach Fig. 1 in der Seitenansicht,
- Fig. 3: eine Explosionszeichnung des Gegenstands nach Fig. 1 ohne die beiden darin anordnenbaren Brandschutzklappen,
- Fig. 4: den Gegenstand nach Fig. 3 im zusammengefügten Zustand,
- Fig. 5: den Gegenstand nach Fig. 4 von vorne,
- Fig. 6: den Gegenstand nach Fig. 4 von hinten,
- Fig. 7: ein zweites Ausführungsbeispiel eines erfindungsgemäßen Brandschutzklappeneinbausatzes ohne darin anordnenbare Brandschutzklappen von hinten,
- Fig. 8: den Gegenstand nach Fig. 7 von vorne,
- Fig. 9: den Gegenstand nach Fig. 7 in einer schrägen Ansicht im montierten Zustand,
- Fig. 10: eine Explosionszeichnung des Gegenstands nach Fig. 7 in einer schrägen Ansicht,
- Fig. 11: den Gegenstand nach Fig. 7 in der Seitenansicht,
- Fig. 12: den Bereich der Stoßkanten zweier Plattensegmente einer Platte sowie ein separates Fixierelement und
- Fig. 13: ein weiteres Ausführungsbeispiel eines erfindungsgemäßen Brandschutzklappeneinbausatzes ohne darin anordnenbare Brandschutzklappen.

In allen Figuren werden für gleiche bzw. gleichartige Bauteile übereinstimmende Bezugszeichen verwendet.

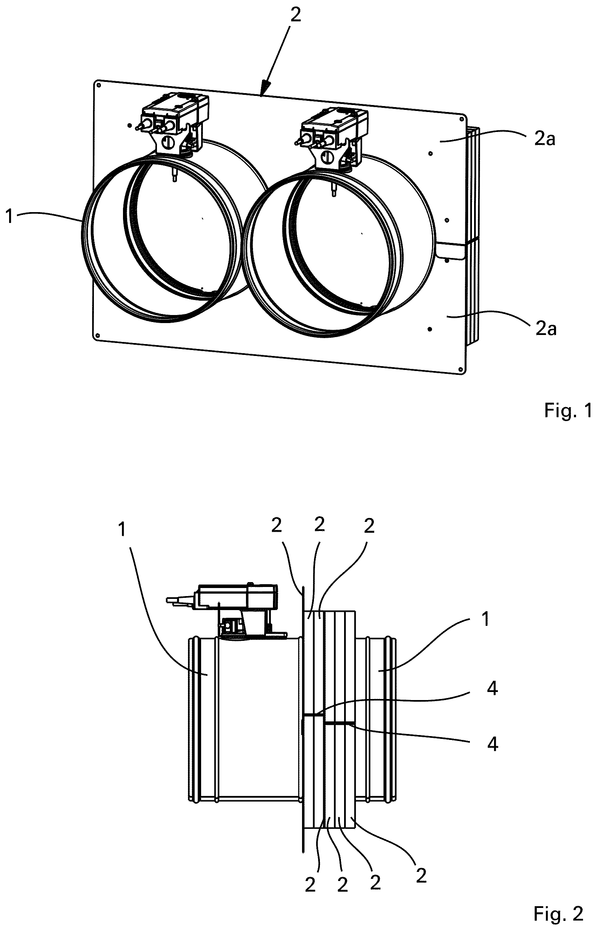

Die Fig. 1 bis 13 zeigen unterschiedliche Ausführungsformen eines erfindungsgemäßen Brandschutzklappeneinbausatzes für den Einbau einer Brandschutzklappe 1 in einer Ausnehmung einer Wand oder einer Decke. Jeder Brandschutzklappeneinbausatz nimmt in den dargestellten Ausführungsbeispielen jeweils zwei Brandschutzklappen 1 auf. Von jeder Brandschutzklappe 1 ist lediglich das Gehäuse sowie die außenseitige Antriebsmechanik dargestellt. Das Gehäuse steht auf beiden Seiten des Brandschutzklappeneinbausatzes hervor.

Der in den Fig. 1 bis 6 gezeigte Brandschutzklappeneinbausatz weist insgesamt sieben Platten 2 auf. Bezogen auf Fig. 2 sind von rechts gesehen die erste, die zweite, die dritte, die fünfte und die sechste Platte 2 als Kalziumsilikat-Platte ausgebildet.

Die vierte Platte 2 und die siebte Platte 2 bestehen aus einem flachen und eben ausgebildeten Blech. Aus diesem Grund sind die vierte Platte 2 und die siebte Platte 2 deutlich schmaler als die fünf anderen Platten 2. Die siebte Platte 2, d. h. die linke Platte 2 in Fig. 2, ist als Frontblende ausgebildet und steht insoweit an allen vier Rändern seitlich gegenüber den sechs anderen Platten 2 hervor.

Jede der sieben Platten 2 umfasst jeweils zwei Aussparungen 3 zur Aufnahme jeweils eines Gehäuses einer Brandschutzklappe 1. Jede Platte 2 umfasst dabei zwei Plattensegmente 2a, die so ausgebildet sind, dass die Gesamtheit ihrer Plattensegmente 2a die zwei Aussparungen 3 bilden, wobei jedes Plattensegment 2a seitlich von außen an einem Gehäuse einer BSK 1 anbringbar oder um zumindest ein Gehäuse einer BSK 1 zumindest teilweise herum anbringbar ist. Die beiden Plattensegmente 2a jeder Platte 2 berühren sich an insgesamt drei Stellen im angebrachten Zustand mittelbar an zwei Stoßkanten 4 mit dem anderen Plattensegment 2a. So ist in dem dargestellten Ausführungsbeispiel zusätzlich an zwei Stellen zwischen den zwei Stoßkanten 4 jedes Plattensegmentes 2a noch ein Dichtungsstreifen 5 vorgesehen.

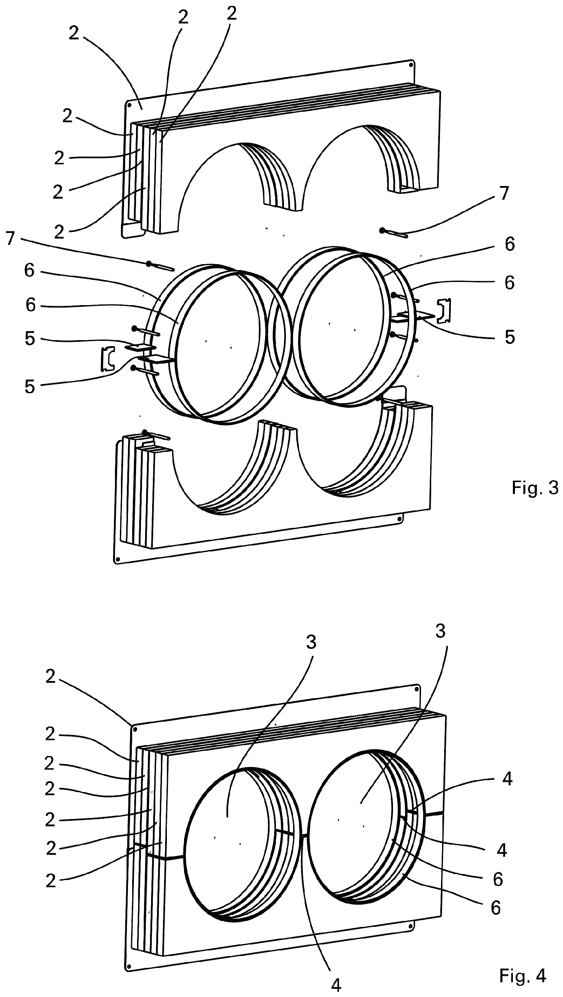

Wie die Explosionszeichnung nach Fig. 3 zeigt, sind zumindest zwischen zwei Platten 2 einerseits und der Außenseite des Gehäuses andererseits zwei, vorzugsweise aus einem intumeszierenden Material bestehende, Dichtungsstreifen 6 angeordnet.

Bei dem in den Fig. 1 bis 6 gezeigten Brandschutzklappeneinbausatz weist jede der sieben Platten 2 genau zwei Plattensegmente 2a auf, wobei jedes Plattensegment 2a jeder Platte 2 derart ausgebildet ist, dass die beiden Plattensegmente 2a im an den Brandschutzklappen 1 angebrachten Zustand je eine Aussparung 3 für jedes aufzunehmende Gehäuse einer Brandschutzklappe 1 bilden. Da das Gehäuse einen runden Gehäusequerschnitt aufweist, weist insoweit jedes Plattensegment 2a zwei halbkreisförmige Ausnehmungen auf, so dass im zusammengesetzten Zustand die beiden Plattensegmente 2a zwei runde Aussparungen 3 bilden. Jedes Plattensegment 2a ist seitlich von außen in radialer Richtung um ein Gehäuse herum anbringbar.

Wie beispielsweise Fig. 2 zeigt, fluchten die Stoßkanten 4 der - von links gesehen - ersten bis vierten Platte 2 einerseits und die Stoßkanten 4 der fünften bis siebten Platte 2 andererseits. Infolgedessen sind die Stoßkanten 4 aller ein und dieselbe Aussparung 3 bildenden Plattensegmente 2a in der Gesamtheit nicht fluchtend angeordnet.

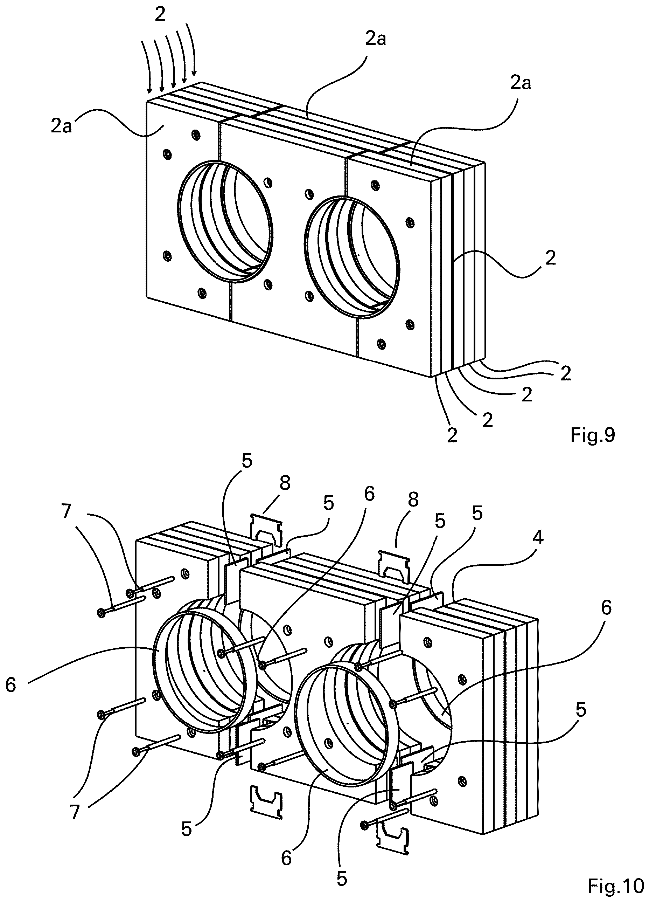

Wie beispielsweise auch der Explosionsdarstellung in Fig. 10 zu entnehmen ist, sind die flächig aneinander liegenden Plattensegmente 2a benachbarter Platten 2 mittels Schrauben 7 miteinander verschraubt. Vor der Montage können insoweit - bezogen auf das Ausführungsbeispiel nach den Fig. 1 bis 6 - beispielsweise zunächst zwei Blöcke aus den jeweils sieben Plattensegmenten 2a hergestellt werden. Auf der Baustelle wird dann zunächst der eine Block mit sieben Plattensegmenten 2a und anschließend der zweite Block mit den sieben Plattensegmenten 2a außenseitig um die beiden Brandschutzklappen 1 herum gelegt.

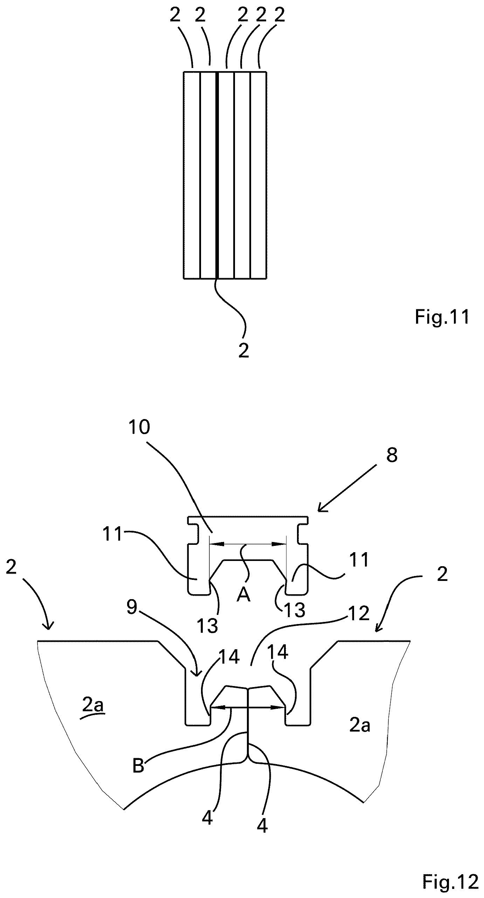

Wie insbesondere Fig. 12 zeigt, sind die beiden Plattensegmente 2a der aus Blech ausgebildeten Platte 2, die sich im angebrachten Zustand an zwei Stoßkanten 4 mit dem anderen Plattensegment 2a berühren, im angebrachten Zustand durch zwei separate als Klammern 8 ausgebildete Fixierelemente in Bezug auf eine Relativbewegung zueinander in zumindest einer Richtung fixiert. Dies ist auch bei dem Ausführungsbeispiel nach den Fig. 1 bis 6 der Fall. Jedes Plattensegment 2a der zwei angrenzenden Plattensegmente 2a weist in dem an die Stoßkante 4 angrenzenden Endbereich jeweils einen von außen seitlich zugänglichen Einführbereich 9 auf. Die beiden aneinandergrenzenden Plattensegmente 2a werden durch die Klammern 8 fixiert. Jede Klammer 8 weist zwei Teilbereiche auf. Mit dem einen Teilbereich greift die Klammer 8 in den Einführbereich 9 des einen Plattensegmentes 2a und mit dem anderen Teilbereich in den Einführbereich 9 des anderen Plattensegmentes 2a hinein.

Jede Klammer 8 weist eine u-förmige Ausgestaltung unter Bildung eines Stegs 10 und zweier daran angeformter, parallel ausgerichteter Fixierschenkel 11 auf. Die Plattensegmente 2a zweier angrenzender Plattensegmente 2a bilden in ihren angrenzenden Endbereichen einen gemeinsamen Aufnahmebereich 12 zur Aufnahme eines Teilbereichs der Klammer 8, nämlich des Steges 10.

Jeder der beiden Fixierschenkel 11 der Klammer 8 weist eine Innenfläche 13 auf, wobei die Innenflächen 13 beider Fixierschenkel 11 aufeinander zuweisend ausgerichtet sind. Die beiden Innenflächen 13 jedes Fixierschenkels 11 verlaufen in dem Bereich, der an das freie Ende jedes Fixierschenkels 11 angrenzt, parallel. In diesem parallel ausgerichteten Bereich sind die beiden Innenflächen 13 in einem Abstand A zueinander angeordnet.

Jeder Einführbereich 9 weist eine Wirkfläche 14 auf, wobei die Wirkflächen 14 der zusammenwirkenden Einführbereiche 9 zweier angrenzender Plattensegmente 2a im fixierten Zustand voneinander wegweisen und in einem Abstand B zueinander angeordnet sind. Wenn die Klammer 8 mit ihren beiden Fixierschenkeln 11 in den jeweiligen Einführbereich 9 eingeführt ist, werden die beiden angrenzenden Plattensegmente 2a fixiert, da die Innenfläche 13 jedes Fixierschenkels 11 mit der korrespondierendem Wirkfläche 14 in Kontakt ist.

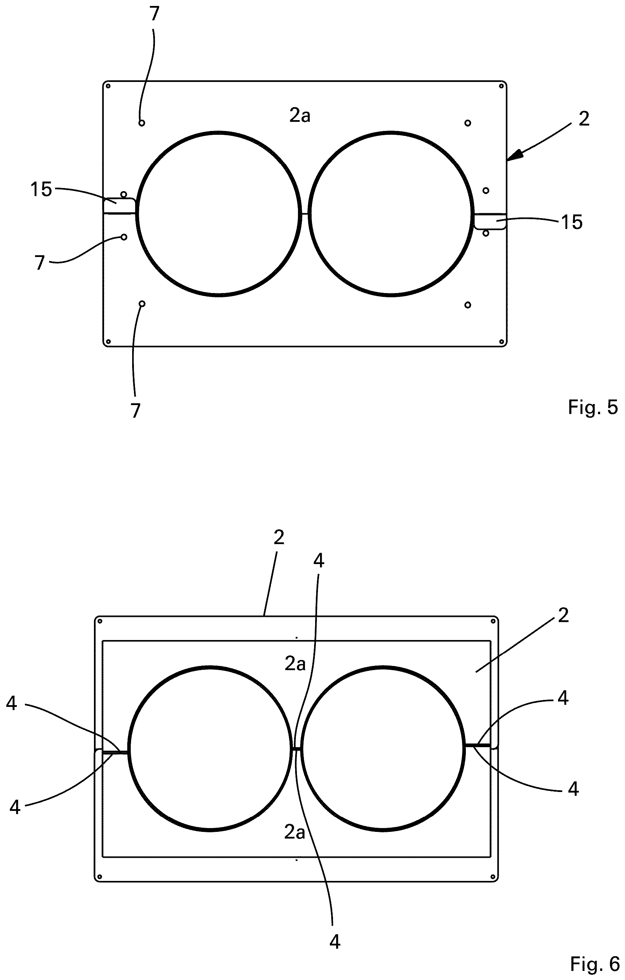

Wie Fig. 5 zu entnehmen ist, grenzt an die Stoßkante 4 eines der beiden Plattensegmente 2a der die Frontblende bildenden Platte 2 ein gegenüber der Stoßkante 4 vorstehender Überlappungsbereich 15 an. Der Überlappungsbereich 15 ist in Bezug auf die generelle Erstreckung dieses Plattensegments 2a um die Materialstärke dieses Plattensegments 2a versetzt angeordnet und ausgerichtet. Bei dem in Fig. 5 dargestellten Ausführungsbeispiel weist das obere Plattensegment 2a im rechten Bereich seiner Stoßkante 4 einen entsprechenden Überlappungsbereich 15 auf, während das untere Plattensegmente 2a im linken Bereich seiner Stoßkante 4 den Überlappungsbereich 15 hat.

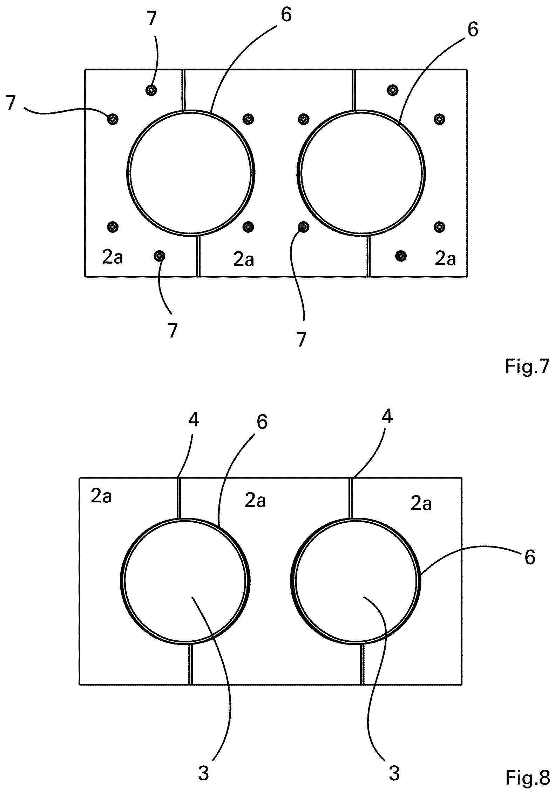

Die Fig. 7 bis 11 zeigen ein zweites Ausführungsbeispiel eines erfindungsgemäßen Brandschutzklappeneinbausatzes, wobei der Brandschutzklappeneinbausatz in dem dargestellten Ausführungsbeispiel aus insgesamt sechs Platten 2 besteht. Die in Fig. 9 dargestellte dritte Platte 2 von links gesehen ist wiederum als Blech ausgebildet, während die fünf anderen Platten 2 als Kalziumsilikat-Platten ausgebildet und insoweit deutlich dicker sind.

Wie den Fig. 7 und 8 zu entnehmen ist, sind bei beiden Aussparungen 3 die beiden Stoßkanten 4 der die jeweilige Aussparung 3 bildenden Plattensegmente 2a nicht auf gleicher Höhe, sondern in Bezug auf den Mittelpunkt einer Aussparung 3 gesehen versetzt zueinander angeordnet.

Der Brandschutzklappeneinbausatz ist wiederum für die Aufnahme von zwei Brandschutzklappen 1 ausgebildet. Allerdings weist jede der drei Platten 2 insgesamt drei Plattensegmente 2a auf, wobei zwei Plattensegmente 2a jeweils einen Plattenendbereich dieser Platte 2 und das dritte Plattensegment 2a das Plattenmittelteil dieser Platte 2 bilden. Jedes einen Plattenendbereich bildende Plattensegment 2a bildet mit dem Plattenmittelteil jeweils eine Aussparung 3.

Damit sind die das Plattenmittelteil bildenden Plattensegmente 2a beiden Aufnahmen zugehörig.

Bei diesem Ausführungsbeispiel sind die beiden Stoßkanten 4 der eine Aussparung 3 bildenden Plattensegmente 2a nicht auf gleicher Höhe angeordnet, wie beispielsweise Fig. 8 zeigt.

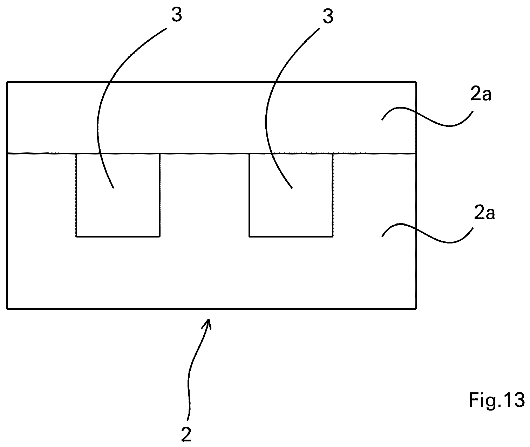

Fig. 13 zeigt ein weiteres Ausführungsbeispiel eines erfindungsgemäßen Brandschutzklappeneinbausatzes, der zur Aufnahme zweier Brandschutzklappen 1 mit einem rechteckigen Querschnitt geeignet ist. Die Platte 2 umfasst zwei Aussparungen 3 zur Aufnahme jeweils eines Gehäuses einer Brandschutzklappe 1, wobei jede Platte 2 dabei zwei Plattensegmente 2a umfasst. Das in Fig. 13 obere Plattensegment 2a ist seitlich von außen an beiden Gehäusen angebracht, während das in Fig. 13 untere Plattensegment 2a seitlich von außen an jedem der beiden Gehäuse zumindest teilweise herum anbringbar ist. So umgibt das untere Plattensegment 2a jedes Gehäuse an insgesamt drei Seiten.

## Patentansprüche

1. Brandschutzklappeneinbausatz für den Einbau von zumindest zwei Brandschutzklappen (1), wobei der Brandschutzklappeneinbausatz für die Anordnung in einer Ausnehmung einer Wand oder einer Decke ausgebildet ist, wobei jede Brandschutzklappe (1) ein Gehäuse aufweist und jeweils einen Bestandteil einer raumlufttechnischen Be- und/oder Entlüftungsanlage bildet, wobei der Brandschutzklappeneinbausatz zumindest eine Platte (2) mit einer Anzahl an Aussparungen (3) zur jeweiligen Aufnahme des Gehäuses einer Brandschutzklappe (1) umfasst, wobei die Anzahl an Aussparungen (3) der Anzahl an aufzunehmenden Brandschutzklappen (1) entspricht, wobei die Platte (2) wenigstens zwei Plattensegmente (2a) umfasst, die so ausgebildet sind, dass die Gesamtheit ihrer Plattensegmente (2a) die Aussparungen (3) bildet und somit ein in die Aussparung (3) eingesetztes Gehäuse von der Gesamtheit an Plattensegmenten (2a) allseitig umgeben ist, wobei jedes Plattensegment (2a) seitlich von außen an zumindest einem Gehäuse anbringbar oder um zumindest ein Gehäuse zumindest teilweise herum anbringbar ist, und wobei sich jedes Plattensegment (2a) im angebrachten Zustand mittelbar oder unmittelbar an zwei Stoßkanten (4) mit dem oder den anderen Plattensegment(en) (2a) berührt.

2. Brandschutzklappeneinbausatz nach dem vorhergehenden Anspruch, **dadurch gekennzeichnet, dass** zumindest ein Plattensegment (2a) mehreren Aufnahmen zugehörig ist.

3. Brandschutzklappeneinbausatz nach einem der vorhergehenden Ansprüche, **dadurch gekennzeichnet, dass** zumindest ein Plattensegment (2a), vorzugsweise jedes Plattensegment (2a), seitlich von außen in radialer Richtung an zumindest einem Gehäuse anbringbar oder um zumindest ein Gehäuse zumindest teilweise anbringbar ist.

4. Brandschutzklappeneinbausatz nach einem der vorhergehenden Ansprüche, **dadurch gekennzeichnet, dass** der Brandschutzklappeneinbausatz für die Aufnahme von zumindest zwei Brandschutzklappen (1) ausgebildet ist und zumindest eine Platte (2) genau zwei Plattensegmente (2a) umfasst, wobei jedes Plattensegment (2a) dieser Platte (2) derart ausgebildet ist, dass die beiden Plattensegmente (2a) im an den Brandschutzklappen (1) angebrachten Zustand je eine Aussparung (3) für jedes aufzunehmende Gehäuse einer Brandschutzklappe (1) bilden.

5. Brandschutzklappeneinbausatz nach einem der Ansprüche 1 bis 3, **dadurch gekennzeichnet, dass** der Brandschutzklappeneinbausatz für die Aufnahme von zwei Brandschutzklappen (1) ausgebildet ist und dass zumindest eine Platte (2) drei Plattensegmente (2a) aufweist, wobei zwei Plattensegmente (2a) jeweils einen Plattenendbereich dieser Platte (2) und das dritte Plattensegment (2a) das Plattenmittelteil dieser Platte (2) bilden und wobei jedes einen Plattenendbereich bildende Plattensegment (2a) mit dem Plattenmittelteil jeweils eine Aussparung (3) bildet.

6. Brandschutzklappeneinbausatz nach einem der Ansprüche 1 bis 4, **dadurch gekennzeichnet, dass** der Brandschutzklappeneinbausatz für die Aufnahme von drei Brandschutzklappen (1) ausgebildet ist und dass zumindest eine Platte (2) vier Plattensegmente (2a) aufweist, wobei zwei Plattensegmente (2a) jeweils einen Plattenendbereich dieser Platte (2) und das dritte und vierte Plattensegment (2a) jeweils eines der beiden Plattenmittelteile dieser Platte (2) bilden und wobei jedes ein Plattenendbereich bildende Plattensegment (2a) mit dem jeweils direkt angrenzenden Plattenmittelteil jeweils eine Aussparung (3) bildet.

7. Brandschutzklappeneinbausatz nach einem der vorhergehenden Ansprüche, **dadurch gekennzeichnet, dass** bei zumindest einer Aussparung (3) die beiden Stoßkanten (4) der die Aussparung (3) bildenden Plattensegmente (2a) nicht auf gleicher Höhe sind.

8. Brandschutzklappeneinbausatz nach einem der vorhergehenden Ansprüche, **dadurch gekennzeichnet, dass** zumindest eine Platte (2) als Kalziumsilikat-Platte ausgebildet ist.

9. Brandschutzklappeneinbausatz nach einem der vorhergehenden Ansprüche, **dadurch gekennzeichnet, dass** zumindest eine Platte (2) aus einem Vollholz, aus einem Werkstoff auf Vollholzbasis oder aus einem Werkstoff auf Holzfurnierbasis besteht.

10. Brandschutzklappeneinbausatz nach einem der vorhergehenden Ansprüche, **dadurch gekennzeichnet, dass** zumindest eine Platte (2) aus einem flachen und eben ausgebildeten Blech besteht.

11. Brandschutzklappeneinbausatz nach einem der vorhergehenden Ansprüche, **dadurch gekennzeichnet, dass** zumindest eine aus einem flachen und eben ausgebildeten Blech bestehende Platte (2) als Frontblende ausgebildet ist.

12. Brandschutzklappeneinbausatz nach einem der vorhergehenden Ansprüche, **dadurch gekennzeichnet, dass** an die Stoßkante (4) eines Plattensegments (2a) zumindest in einem Teilbereich ein gegenüber der Stoßkante (4) vorstehender Überlappungsbereich (15) angrenzt, wobei der Überlappungsbereich (15) in Bezug auf die generelle Erstreckung dieses Plattensegments (2a) um die Materialstärke dieses Plattensegments (2a) versetzt angeordnet ist.

13. Brandschutzklappeneinbausatz nach einem der vorhergehenden Ansprüche, **dadurch gekennzeichnet, dass** die Plattensegmente (2a) zumindest einer Platte (2), die sich im angebrachten Zustand an zwei Stoßkanten (4) mit dem oder den anderen Plattensegment(en) (2a) berühren, im angebrachten Zustand durch zumindest ein separates Fixierelement mittelbar in Bezug auf eine Relativbewegung zueinander in zumindest einer Richtung fixiert sind, wobei jedes Plattensegment (2a) zweier angrenzender Plattensegmente (2a), vorzugsweise in dem an die Stoßkante (4) angrenzenden Endbereich, jeweils wenigstens einen von außen seitlich zugänglichen Einführbereich (9), vorzugsweise einen als Einführöffnung ausgebildeten Einführbereich (9), aufweist, und dass die beiden aneinandergrenzenden Plattensegmente (2a) durch wenigstens eine als Fixierelement ausgebildete Klammer (8), die mit einem Teilbereich in zumindest einen Einführbereich (9) des einen Plattensegmentes (2a) und mit einem anderen Teilbereich in zumindest einen Einführbereich (9) des anderen Plattensegmentes (2a) hineingreift, fixiert sind.

14. Brandschutzklappeneinbausatz nach dem vorhergehenden Anspruch, **dadurch gekennzeichnet, dass** zumindest eine Klammer (8) eine u-förmige Ausgestaltung unter Bildung eines Stegs (10) und zweier daran angeformter, vorzugsweise parallel ausgerichteter, Fixierschenkel (11) aufweist.

15. Brandschutzklappeneinbausatz nach einem der Ansprüche 13 oder 14, **dadurch gekennzeichnet, dass** die Plattensegmente (2a) zweier angrenzender Plattensegmente (2a) in ihren angrenzenden Endbereichen einen gemeinsamen Aufnahmebereich (12) zur Aufnahme eines Teilbereichs der Klammer (8), vorzugsweise des Steges (10) der Klammer (8), bilden.

16. Brandschutzklappeneinbausatz nach einem der Ansprüche 13 bis 15, **dadurch gekennzeichnet, dass** jeder Einführbereich (9) eine Wirkfläche (14) aufweist, wobei die Wirkflächen (14) der zusammenwirkenden Einführbereiche (9) zweier angrenzender Plattensegmente (2a) im fixierten Zustand voneinander wegweisen und in einem Abstand B zueinander angeordnet sind.

17. Brandschutzklappeneinbausatz nach einem der vorhergehenden Ansprüche, **dadurch gekennzeichnet, dass** der Brandschutzklappeneinbausatz zumindest zwei Platten (2) umfasst, wobei benachbarte Platten (2) flächig aneinander liegen.

18. Kombination umfassend zum einen zumindest zwei Brandschutzklappen (1), wobei jede Brandschutzklappe (1) ein, vorzugsweise einen runden oder einen viereckigen Strömungsquerschnitt aufweisendes, Gehäuse und ein darin, vorzugsweise mittig auf den Strömungsquerschnitt bezogen, zwischen einer Offenstellung und einer Schließstellung um eine Drehachse herum verschwenkbar gelagertes, vorzugsweise aus Kalziumsilikat bestehendes, Klappenblatt aufweist, sowie umfassend zum anderen einen die Gehäuse aller Brandschutzklappen (1) außenseitig umgebenen Brandschutzklappeneinbausatz, wobei der Brandschutzklappeneinbausatz nach einem der vorgehenden Ansprüche ausgebildet ist und der Brandschutzklappeneinbausatz eine der Anzahl an Brandschutzklappen (1) entsprechende Anzahl an Aussparungen (3) aufweist, wobei jede Aussparung (3) jeweils ein Gehäuses einer Brandschutzklappe (1) aufnimmt.

19. Kombination nach dem vorhergehenden Anspruch, **dadurch gekennzeichnet, dass** zwischen zumindest einer angebrachten Platte (2) und der Außenseite des Gehäuses wenigstens ein, vorzugsweise aus einem intumeszierenden Material bestehender, Dichtungsstreifen (5) angeordnet ist.
